# EUROPÄISCHE PATENTANMELDUNG

(11) **EP 1 057 660 A1**
(43) Veröffentlichungstag der Anmeldung: **06.12.2000**
(21) Anmeldenummer: 99110336.7
(22) Anmeldetag: 28.05.1999
(51) Int. Cl.: B60C 9/18, B60C 9/20

(54) **Gürtelreifen für Fahrzeugräder**

(71) Anmelder: Markewitz, Wolfgang, 40883 Ratingen (DE)
(72) Erfinder: Markewitz, Wolfgang, 40883 Ratingen (DE)
(74) Vertreter: Gille Hrabal Struck Neidlein Prop Roos

(57) **Zusammenfassung**

Die Erfindung betrifft einen für Fahrzeugräder bestimmten pneumatischen Gürtelreifen, der einen mit Druckluft zu befüllenden torusförmigen Körper aus gummiartigem Material aufweist, welcher unter einer ringförmigen äußeren Lauffläche eine Gürtel-Einlage enthält, die einen oder mehrere in Umfangsrichtung des Reifens dehn- und rückformbare Festigkeitsträger umfaßt.

Der Erfindung liegt die Aufgabe zugrunde, beispielsweise bei einem Gürtelreifen für Fahrzeugräder der eingangs genannten Gattung die Quergürtel-Einlage derart auszugestalten, daß sie sich über den Reifenquerschnitt in Umfangsrichtung des Reifens gleichmäßiger dehnen und rückverformen läßt.

Die Aufgabe wird dadurch gelöst, daß die Festigkeitsträger (2; 3; 6; 7; 10; 11) der Gürtel-Einlage (1; 5; 9) gitterförmig, netzförmig oder fachwerkförmig angeordnet sind und aus in regelmäßigen und gleichen Abständen quer zur Umfangsrichtung des Reifens sich nahezu über die Breite der Lauffläche erstreckenden zug- und druckfesten Querstäben (2; 7; 10), und einer Schar von schräg zu den Querstäben verlaufenden Diagonalstäben (3; 6; 11) besteht, wobei die Diagonalstäbe und die Querstäbe an den Kreuzungspunkten (4) nahezu fest miteinander verbunden sind.

## Beschreibung

Die Erfindung betrifft einen für Fahrzeugräder bestimmten pneumatischen Gürtelreifen, der einen mit Druckluft zu befüllenden torusförmigen Körper aus gummiartigem Material aufweist, welcher unter einer ringförmigen äußeren Lauffläche eine Gürtel-Einlage enthält, die einen oder mehrere in Umfangsrichtung des Reifens dehn- und rückformbare Festigkeitsträger umfaßt.

Gürtelreifen dieser Gattung sind bekannt (EP 0 664 229 A1). Bei diesen bekannten Gürtelreifen besteht die Quergürtel-Einlage beispielsweise aus mäanderförmig zugeschnittenem Blech, das die Dehnbarkeit und Rückformbarkeit der Einlage gewährleistet. Wegen der Mäanderform können sich jedoch beim Dehnen und Rückformen des Festigkeitsträgers über den Querschnitt des Reifens Ungleichförmigkeiten ergeben, welche wegen der Rückverformung des Gürtelreifens im Aufstandsbereich, insbesondere beim abrollenden Gürtelreifen, zu Unregelmäßigkeiten führen können.

Der Erfindung liegt die Aufgabe zugrunde, beispielsweise bei einem Gürtelreifen für Fahrzeugräder der eingangs genannten Gattung die Quergürtel-Einlage derart auszugestalten, daß sie sich über den Reifenquerschnitt in Umfangsrichtung des Reifens gleichmäßiger dehnen und rückverformen läßt.

Diese Aufgabe wird erfindungsgemäß mit einem Gürtelreifen gelöst, welcher die Merkmale des Anspruches 1 aufweist.

Vorteilhafte Ausgestaltungen und Weiterbildungen der Erfindung sind Gegenstand der direkt oder indirekt auf den Patentanspruch 1 rückbezogenen Unteransprüche.

Die erfindungsgemäße Gürtel-Einlage für pneumatische Quergürtelreifen von Fahrzeugrädern hat eine gitterförmige oder netzartige Struktur, welche in Umfangsrichtung des Gürtelreifens dehnbar und rückformbar ist. Die die Quergürtel-Struktur bildenden druckfesten Druckstäbe (Querstäbe) und die diese kreuzenden und mit ihnen verbundenen "elastischen" Diagonalstäbe sind in sich gesehen weder dehnbar noch rückformbar. Vielmehr sind sie sozusagen "starr", d. h. in ihrer gestreckten Länge nicht veränderbar, so daß die Dehnbarkeit und Rückformbarkeit der Quergürtel-Einlage praktisch allein durch die Konfiguration der Einlage und nicht durch Eigenschaften der einzelnen Stäbe derselben bedingt ist.

Die in Querrichtung verlaufenden zug- und druckfesten Querstäbe sind mit den zwischen diesen Stäben schräg verlaufenden Diagonalstäben an den Schnittstellen oder Kreuzungsstellen kraftschlüssig oder fest miteinander verbunden, beispielsweise auch miteinander verschweißt oder verlötet.

Alternativ können die Quer- und die Diagonalstäbe formschlüssig auch so miteinander verbunden sein, daß sie gestützt im Komposit an den Kreuzungsstellen nahezu unverschieblich sind.

Da die Dehnungen oder Stauchungen des Gürtelreifens in Umfangsrichtung desselben relativ gering sind, können die zug- und druckfesten Querstäbe und die ebenfalls zug- und druckfesten Diagonalstäbe sich im Dehnungs- und Stauchbereich des Gürtelreifens ausreichend gegeneinander bewegen, obwohl im Bereich der Schnittstellen oder Verbindungsstellen im Gummi eine Verbindung vorliegt.

Die zug- und druckfesten Querstäbe und auch die Diagonalstäbe der Quergürtel-Einlage sind im Querschnitt beispielsweise rund oder abgerundet bis flach, d. h. kreisförmig oder ähnlich konturiert bzw. profiliert. Sie können aber auch Rechteckform, vorzugsweise mit abgerundeten Kanten, aufweisen.

Die Festigkeitsträger der Gürtel-Einlage sind gemäß der Erfindung aus ihrem spannungsfreien Gleichgewichtszustand infolge der möglichen Winkel-/ Lageveränderungen der hochfesten Diagonalstäbe in Umfangsrichtung des Reifens und der Verschiebung der Querstäbe in Querrichtung des Reifens um bis zu 15 % elastisch streckbar und verkürzbar, allein aufgrund der Struktur der Gürtel-Einlage und ohne die Stäbe selbst strecken oder stauchen zu müssen.

Vorzugsweise werden die Festigkeitsträger der Gürtel-Einlage im Reifen-Rohling um etwa 3 bis 5 % des Reifenumfangs verkürzt montiert, so daß der spannungsfreie Gleichgewichtszustand bei etwa 100 % des Formmaßes innerhalb des Aufstandsbereiches des unter Druck stehenden Gürtelreifens erreicht wird, wo sich die zug- und druckfesten Querstäbe im Bereich der aus der Radlast aufgezwungenen Umfangsverkürzung aufgrund der Winkel/Lageänderungen der Diagonalstäbe wechselseitig in Querrichtung des Reifens geringfügig gegeneinander verschieben.

Die Festigkeitsträger können im Reifen-Rohling auch so montiert sein, daß der spannungsfreie Gleichgewichtszustand der Gürtel-Einlage bei bis etwa 105 % des Formmaßes eintritt.

Durch die Erfindung wird ein tangential bzw. in Umfangsrichtung des Gürtelreifens zug- und druckweicher, gegen Spannungsspitzen unempfindlicher Festigkeitsträger, als Quergürtel-Einlage des Gürtelreifens zur Übertragung hoher Seitenkräfte geschaffen.

Dies wird dadurch erreicht, daß die im Querschnitt runden oder rechteckigen, abgerundete Ecken aufweisenden Querstäbe und die in sich abwechselnden Richtungen, aber in gleichen Winkellagen bzw. parallel zueinander verlaufenden Diagonalstäbe vorzugsweise im wesentlichen in einer Ebene liegen und an den Schnittstellen mit den Querstäben nahezu unverschieblich verbunden sind.

Ein besonderer Vorteil der erfindungsgemäßen Gürtel-Einlage liegt auch darin, daß die zug- und druckfesten Querstäbe der Einlage sich infolge der im hochfrequenten Fahrbahn-Rollkontakt des Gürtelreifens unter Radlast entstehenden system-immanenten Verkürzungen der Gürtel-Einlage wechselseitig quer zueinander verschieben, wodurch sich die Breite der Gürtel-Einlage in der Aufstandsfläche vergrößert.

In einer bevorzugten Ausführungsform weisen die in Reifen-Umfangsrichtung (also 0°) verlaufenden vorgeformten Diagonalstäbe zwischen den jeweils im Abstand von 5 bis 25 mm (oberhalb und unterhalb) rechtwinklig kreuzenden Druck- oder Querstäben einen Winkel von +85° bis +60° im Wechsel zu -85° bis -60° auf.

Im vulkanisierten Zustand läßt bei den zuvor beschriebenen Ausführungsbeispielen die an der Gürtel-Einlage fest haftende und inkompressible Gummi-Matrix kaum relative Bewegungen der Stäbe der Gürtel-Einlage zu und verstärkt so die hohe mechanische Fixierung der beispielsweise unter Torsionsspannung anliegenden Diagonalstäbe mit den Druck- oder Querstäben so sehr, daß es weiterer Befestigungen nicht bedarf.

Durch die gewählte Struktur entsteht eine flecht- oder fachwerkartige Festigkeitsstruktur mit exakt definierter Form und hoher mechanischer Verbundwirkung. Diese erfindungsgemäße Festigkeitsstruktur kann für den Aufbau des Reifen-Rohlings auch zu einem stoßfreien Quergürtelring gefügt werden.

Diese nicht überlappende ringförmige Festigkeitsstruktur bietet neben der Minderung von störenden Effekten aus Konizität, Kraftschwankungen, Gleichförmigkeit u.ä. weitere Vorteile in Bezug auf die gewünschte tangentiale Feder-Charakteristik der Gürtel-Einlage.

Aufgrund der innovativen inneren Verformungsmechanik nehmen aber auch die nicht vorgeformten Festigkeitsträger der Gürtel-Einlage an der Gesamtverformung teil. Dieses Verformungsverhalten tritt ein, wenn die vorgeformten Festigkeitsträger durch Kraftschwankungen elastisch in Richtung ihrer Erstreckung (z. B. in 0° = X-Richtung) gedehnt werden. Als Reaktion verschieben sich dann nämlich die nicht vorgeformten Festigkeitsträger (z. B. in 90° = Y-Richtung) wechselweise so gegeneinander, daß sich die Breite des Gewebes, bezogen auf seinen Gleichgewichtszustand, ändert. Das Gewebe der Gürtel-Einlage wird aufgrund seiner Längenänderung breiter oder auch schmaler.

Während bei betriebsbedingter Belastung die geraden Querstäbe ihre Länge faktisch nicht ändern, wird das Quergürtelgewebe infolge der Winkeländerung der Diagonalstäbe so gedehnt bzw. verkürzt, daß dem bandförmigen Festigkeitsträger die erfindungsgemäße tangentiale Elastizität bei gleichzeitiger lateraler Tragfähigkeit zur Verfügung steht.

Die geraden oder gewellten Querstäbe und die sie wechselweise z.B. oberhalb und unterhalb mit ihrer Torsionskraft, verbindenden Diagonalstäbe sind vorzugsweise Monofile, z. B. Drähte.

Das Längenverhältnis der vorgeformten Diagonalstäbe zwischen den Querstäben in Relation zu ihrer abgewickelten Länge beträgt zwischen etwa 1 : 2 und 1 : 3,5.

Die Erfindung betrifft insbesondere ein technisches Gewebe mit charakteristischen Eigenschaften seiner Festigkeitsträger, bei dem die Gewebe-Struktur in einer Richtung hochelastisch und in der Querrichtung gleichzeitig biegesteif, d. h. halb-elastisch, in Verbindung mit dehnsteifen Bändern in X-Richtung (Länge) ist, insbesondere als Verstärkung von Kunststoff- und Gummi-Produkte.

Ferner betrifft die Erfindung ein teilelastisches technisches Gewebe, bei dem die in einer Richtung elastische Charakteristik durch die Verwendung von vorgeformten Festigkeitsträgern und eine gleichzeitig dazu in 90°-Richtung wirkende Steifigkeit durch nicht vorgeformte Festigkeitsträger erreicht wird.

In einer beispielhaften Ausführungsform wird das erfindungsgemäße Gewebe als Verstärkung von Antriebs- oder Lautbändern mit seiner definierten hochelastischen Ausrichtung (Festigkeitsträger) zur Aufnahme bzw. zum Ausgleich der geschwindigkeitsabhängigen Kraftschwankungen in 0° (X-Richtung) angeordnet, während die hochfeste Ausrichtung (Festigkeitsträger) des Gewebes hierzu in 90° (Y-Richtung) verläuft.

Hierdurch wird es möglich, daß Bänder oder Luft-Reifen infolge ihrer definierten federartigen Dehnbarkeit mit einer gewünschten Vorspannung betrieben bzw. benutzt werden können. Die jeweils gesuchte Feder-Charakteristik wird erfindungsgemäß sowohl durch die Querschnitte sowie von dem Verhältnis der abgewickelten Länge der Diagonalstäbe zum Abstand der Querstäbe bestimmt. Dies bestimmt letztlich auch den/die Winkel (bezogen auf ihre Erstreckung) der Vorformung der elastisch arbeitenden Festigkeitsträger (Diagonalstäbe).

In der Zeichnung sind Ausführungsbeispiele der Quergürteleinlage eines erfindungsgemäß ausgestalteten Gürtelreifens für Fahrzeugräder schematisch dargestellt, und zwar zeigt
- Fig. 1: einen Querschnitt eines Ausschnittes der Quergürteleinlage nach einer ersten Ausführungsform,
- Fig. 2: eine Draufsicht auf den Ausschnitt der Quergürteleinlage gemäß Fig. 1,
- Fig. 3: eine Teilansicht eines Kreuzungsbereiches der Quergürteleinlage aus Fig. 1 und 2 in gegenüber diesen Figuren vergrößertem Maßstab,
- Fig. 4: einen Querschnitt eines Ausschnittes der Quergürteleinlage nach einer zweiten Ausführungsform,
- Fig.4a: einen senkrechten Schnitt der Quergürteleinlage aus Fig. 4 nach Linie IVa - IVa in Fig. 4,
- Fig. 5: eine Draufsicht eines Ausschnittes der Querggürteleinlage nach einer dritten Ausführungsform,
- Fig.5a: eine Ansicht der Quergürteleinlage aus Fig. 5, woraus die Querschnittsform der Diagonalstäbe und der Querstäbe zu erkennen ist, und
- Fig. 6: eine andere Querschnittsform für Diagonalstäbe und Querstäbe.

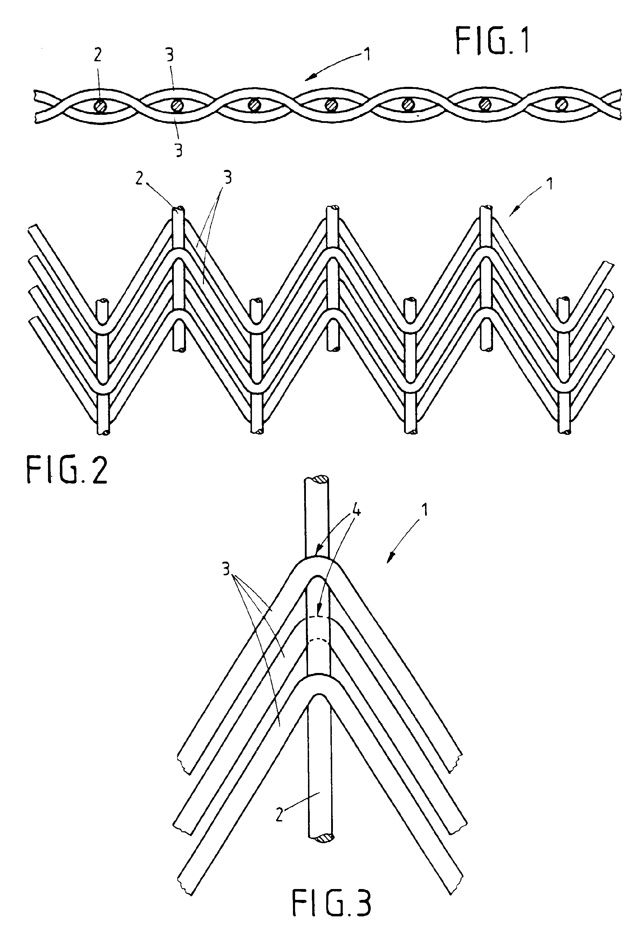

Die Quergürtel-Einlage 1 gemäß Fig. 1 bis 3 besteht aus in Querrichtung bzw. der 90°-Lage oder Y-Richtung geradlinig verlaufenden Querstäben 2, die auch zur Druckaufnahme im Gürtelreifen bestimmt sind, und diese gewebeartig überkreuzenden Diagonalstäbe 3, welche zickzack-förmig geführt sind und an den Kreuzungsstellen 4 mit den Querstäben fest verbunden, beispielsweise verschweißt und/oder verlötet, sind.

Dabei können sowohl die Querstäbe 2 als auch die Diagonalstäbe 3 gewellt ausgebildet sein, um die Gürteil-Einlage so flach wie möglich ausbilden zu können.

Da sowohl die Querstäbe 2 als auch die Diagonalstäbe 3 weder dehnbar noch stauchfähig sind, erfolgt die Verformung der Gürtel-Einlage 1 allein dadurch, daß durch die zickzack-förmige Konfiguration der Diagonalstäbe 3 bei einer entsprechenden Verschiebung der Querstäbe 2 in der Längsrichtung die Quergürteleinlage gedehnt oder verkürzt wird.

Die Querstäbe 2 und die Diagonalstäbe 3 der Gürtel-Einlage können dabei aus beliebigen, jedoch hochfesten Materialien bestehen, das heißt sowohl aus Metall als auch aus Kunststoff. Wichtig ist, daß die Querstäbe und die Diagonalstäbe zwar in sich starr sein können, jedoch aufgrund der speziellen Konfiguration der Gürtel-Einlage 1 eine relative Bewegung zulassen, obwohl die Querstäbe 2 und die Diagonalstäbe 3 an den Kreuzungsstellen 4 fest bzw. nahezu starr miteinander verbunden sind.

Bei der Ausführungsform gemäß Fig. 1 bis 3 hat die Gürtel-Einlage 1 in der Praxis beispielsweise eine Bauhöhe von bis zu 3,0 mm.

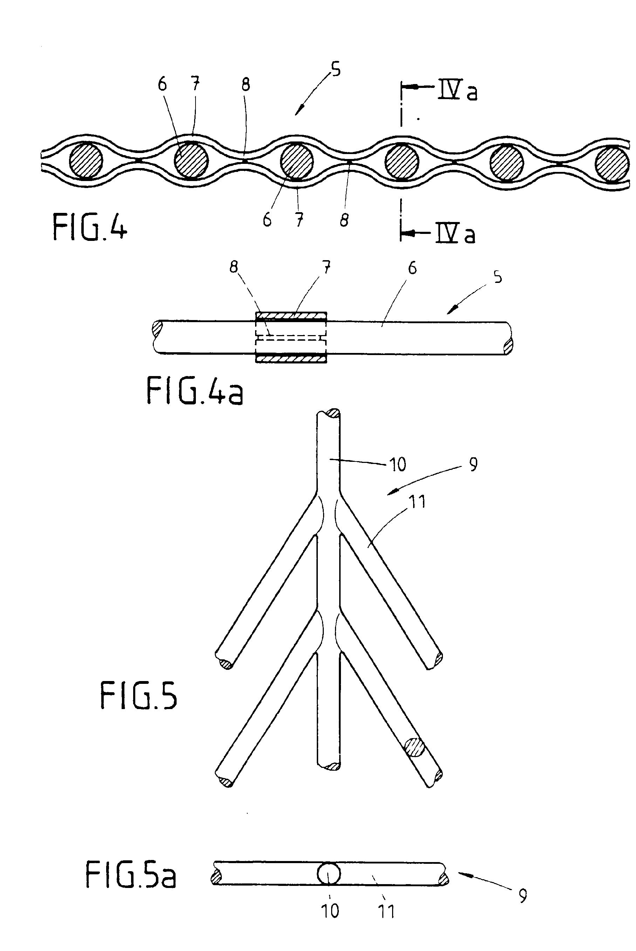

In Fig. 4 ist ein Ausschnitt aus einer gegenüber Fig. 1 bis 3 abgewandelten Gürtel-Einlage 5 dargestellt, welche in einer Ebene liegende geradlinig verlaufende Diagonalstäbe 6 aufweist, die von als Flachstäbe ausgebildeten oberen und unteren Querstäben 7 zusammengehalten sind. Diese Querstäbe 7 können zwischen benachbarten Diagonalstäben 6 im Bereich von Kontaktstellen 8 fest miteinander verbunden, beispielsweise miteinander verschweißt, sein.

Bei dieser Ausführungsform der Gürtel-Einlage 5 haben die die Querstäbe 7 bildenden Flachstäbe eine Dicke von etwa 0,3 bis 1,0 mm.

Während bei der Ausführungsform gemäß Fig. 4 und 4a die Diagonalstäbe 6 und die Querstäbe 7 einander überkreuzend in unterschiedlichen Ebenen angeordnet sind, zeigt Fig. 5 und 5a eine Ausführungsform, bei der die Gürtel-Einlage 9 aus einstückig miteinander verbundenen, im Querschnitt jeweils etwa kreisförmigen Querstäben 10 und winklig dazu verlaufenden Diagonalstäben 11, welche einstückig miteinander verbunden sind, besteht. Bei dieser Ausführungsform hat die Gürtel-Einlage eine extrem geringe Bauhöhe von beispielsweise 1,0 mm.

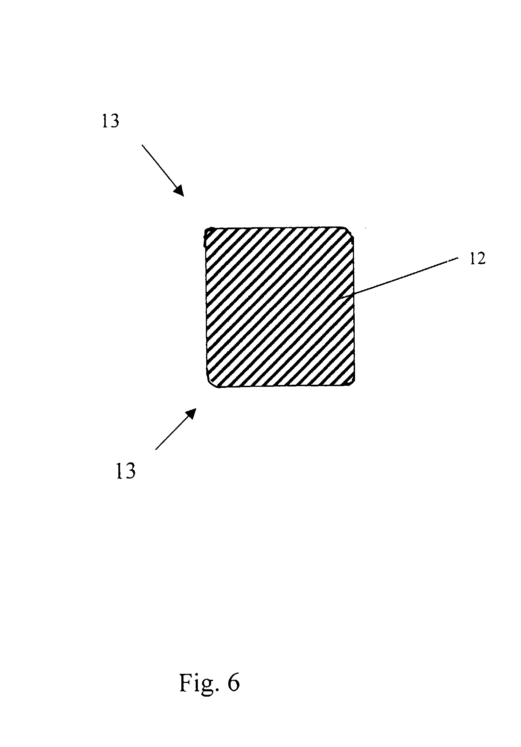

Während bei den Ausführungsformen gemäß Fig. 1 bis 5 die Querstäbe und teilweise auch die Diagonalstäbe einen kreisförmigen Querschnitt aufweisen, zeigt Fig. 6 in stark vergrößertem Maßstab eine abgewandelte Querschnittsform für Querstäbe und Diagonalstäbe. Die Querschnittsform derartiger Profilstäbe 12 ist im wesentlichen rechteckig mit abgerundeten Ecken 13 bzw. Kanten.

Für eine aus derartigen Profilstäben 12 gebildete Gürtel-Einlage werden die Diagonalstäbe beispielsweise hochkant und die Querstäbe flachliegend angeordnet.

## Patentansprüche

1. Gürtelreifen für Fahrzeugräder, mit einem mit Druckluft zu befüllenden torusförmigen Körper aus gummiartigem Material, der unter einer ringförmigen äußeren Lauffläche eine Quergürtel-Einlage (1; 5; 9) enthält, welche in Umfangsrichtung des Reifens dehn- und rückformbare Festigkeitsträger aufweist,
**dadurch gekennzeichnet,**
daß die Festigkeitsträger (2; 3; 6; 7; 10; 11) der Gürtel-Einlage (1; 5; 9) gitterförmig, netzförmig oder fachwerkförmig angeordnet sind und aus in regelmäßigen und gleichen Abständen quer zur Umfangsrichtung des Reifens sich nahezu über die Breite der Lauffläche erstreckenden zug- und druckfesten Querstäben (2; 7; 10), und einer Schar von schräg zu den Querstäben verlaufenden Diagonalstäben (3; 6; 11) besteht, wobei die Diagonalstäbe und die Querstäbe an den Kreuzungspunkten (4) nahezu fest miteinander verbunden sind.

2. Gürtelreifen nach Anspruch 1, dadurch gekennzeichnet, daß die Schar der Diagonalstäbe (3; 6; 11) zwischen jeweils aufeinanderfolgenden Querstäben (2; 7; 10) gegenläufig angeordnet ist.

3. Gürtelreifen nach Anspruch 1 oder 2, dadurch gekennzeichnet, daß die aufeinanderfolgenden Querstäbe (2; 7; 10) parallel zueinander im gegenseitigen Abstand angeordnet sind.

4. Gürtelreifen nach einem der Ansprüche 1 bis 3, dadurch gekennzeichnet, daß Diagonalstäbe (3; 6; 11) zwischen den jeweils aufeinanderfolgenden Querstäben (2; 7; 10) zickzackförmig und parallel zueinander angeordnet sind.

5. Gürtelreifen nach einem der Ansprüche 1 bis 4, dadurch gekennzeichnet, daß die Diagonalstäbe (3) und die Querstäbe (2) nach Art eines Flachgewebes miteinander verbunden sind (Fig. 1 bis 3).

6. Gürtelreifen nach einem der Ansprüche 1 bis 4, dadurch gekennzeichnet, daß die Diagonalstäbe (6) zwischen zwei Lagen von als Flachstäbe ausgebildeten Querstäben (7) angeordnet sind (Fi.g 4).

7. Gürtelreifen nach Anspruch 6, dadurch gekennzeichnet, daß die flachen Querstäbe (7) der beiden Lagen jeweils zwischen den einzelnen Diagonalstäben (6) an Kontaktstellen (8) miteinander verbunden sind.

8. Gürteilreifen nach einem der Ansprüche 1 bis 4, dadurch gekennzeichnet, daß die Diagonalstäbe (11) und die Querstäbe (10) in einer Ebene liegend einstückig miteinander verbunden sind (Fig. 5).

9. Gürtelreifen nach einem der Ansprüche 1 bis 8, dadurch gekennzeichnet, daß die Diagonalstäbe (3; 6; 11) und/oder die Querstäbe (2; 10) einen kreisförmigen Querschnitt aufweisen.

10. Gürtelreifen nach einem der Ansprüche 1 bis 8, dadurch gekennzeichnet, daß die Diagonalstäbe (3; 6; 11) und/oder die Querstäbe (2; 10) einen von der Kreisform abweichenden Querschnitt aufweisen.

11. Gürtelreifen nach Anspruch 10, dadurch gekennzeichnet, daß die Diagonalstäbe und/oder die Querstäbe als im Querschnitt rechteckige Profilstäbe (12) mit abgerundeten Kanten oder Ecken (13) ausgebildet sind.

12. Gürtelreifen nach einem der Ansprüche 1-11, dadurch gekennzeichnet, daß das aus den Querstäben (2) und den Diagonalstäben (3) gebildete Flachgewebe verformungsmechanisch in Richtung der Querstäbe (2) formsteifer ist als in Richtung der Diagonalstäbe (3).

13. Gürtelreifen nach einem der vorhergehenden Ansprüche, dadurch gekennzeichnet, daß sich die Querstäbe (2) des Flachgewebes in zwei Ebenen und die Diagonalstäbe (3) in zwei weiteren Ebenen unterhalb und oberhalb erstrecken.

14. Gürtelreifen nach einem der vorhergehenden Ansprüche, dadurch gekennzeichnet, daß sich die vorgeformten Querstäbe (2) über drei Ebenen des Flachgewebes erstrecken und die Diagonalstäbe nur in der mittleren Ebene.

15. Gürtelreifen nach einem der vorhergehenden Ansprüche, dadurch gekennzeichnet, daß sich die vorgeformten Querstäbe (2) und Diagonalstäbe (3) des Flachgewebes sich regelmässig abwechselnd nur über zwei Ebenen erstrecken.
